(19) Europäisches Patentamt
European Patent Office
Office européen des brevets

(11) Publication number: **0 215 543**
**B1**

(12) **EUROPEAN PATENT SPECIFICATION**

(45) Date of publication of patent specification: **11.04.90**

(51) Int. Cl.⁵: **C 08 G 63/00,** C 08 G 69/00, C 08 G 67/00

(21) Application number: **86304225.5**

(22) Date of filing: **03.06.86**

(54) **A new process for making polyesters, polyamides and polyketones.**

(30) Priority: **03.06.85 US 740451**

(43) Date of publication of application:
**25.03.87 Bulletin 87/13**

(45) Publication of the grant of the patent:
**11.04.90 Bulletin 90/15**

(84) Designated Contracting States:
**DE FR GB IT NL SE**

(56) References cited:
**WO-A-84/03891**
**US-A-2 589 688**

(73) Proprietor: **THE DOW CHEMICAL COMPANY**
**2030 Dow Center Abbott Road P.O. Box 1967**
**Midland Michigan 48640-1967 (US)**

(72) Inventor: **Walters, Marlin E.**
**304 Jansen Drive**
**West Columbia Texas 77486 (US)**

(74) Representative: **Raynor, John et al**
**W.H. Beck, Greener & Co 7 Stone Buildings**
**Lincoln's Inn**
**London WC2A 3SZ (GB)**

**EP 0 215 543 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Polyesters are heterochain macromolecular compounds that contain carboxylic ester linkages in the chain as opposed to other polymers containing ester groups which are pendant from the chain such as poly(acrylates) and poly(vinyl esters). Polyesters can be made from (1) the reaction of diols with dicarboxylic acids, (2) the intermolecular polymerization of hydroxycarboxylic acids and (3) ring-opening polymerizations of lactone and cyclic esters. The first produces an AABB type polyester while the latter two produce the AB type polymer.

Catalysts used in direct esterification reactions as in the above, when needed to maintain the self-catalyzed reaction, are sulfonic acids, e.g., toluenesulfonic, phosphoric acid and dialkyltin oxides. Strongly acidic catalysts, however, tend to discolor the product and must be removed from it. Instead of the above reactants which contain carboxylic or dicarboxylic acid groups, similar compounds in which carbonyl or dicarbonyl chlorides replace the carboxylic acid groups can also be used to react with the hydroxyl groups. The by-product is hydrogen chloride. Transesterification of diesters of monohydric alcohols with dihydric alcohols is yet another method of obtaining the polyesters.

In the use of carbonyl chlorides the by-product acid must be absorbed and disposed of while the monohydric alcohol by-product in the transesterification reaction must be removed or poor yields or low molecular weight polyester may result.

Polyamides are normally thought of as condensation products formed by the intramolecular reaction of difunctional amino acids or between dibasic acids and diamines. The former reaction produces an AB-type polymer and the latter an AABB-type. The polyamides are frequently referred to generically as nylons. Polyamides can also be prepared by the addition of an amine to an activated double bond, e.g. an unsaturated amide. Diamines can also be reacted with diamides to give polyamides. The use of diacid chlorides in place of the dicarboxylic acids to react with the diamine is another route to polyamides. Yet another method of preparing the polyamides is by the reaction of diacids with diisocyanates. The by-products of these latter methods is an acid or salt which generates a disposal problem. Also involved is the handling of toxic materials in the case of using diisocyanates.

It has now been found that polyesters and polyamides can be made without the corrosive HCl or undesirable monohydric alcohols as by-products of the polyester reaction or without the by-product acid or salt or the handling of the toxic reactants in the polyamide reaction. The polyesters and polyamides can now be made by reacting a bis(trichloromethylketone) with a dihydric alcohol and a diamine, respectively.

Thus, for example, a bisphenol can be reacted with bis(trichloroacetyl)phenyl ether in the presence of a basic catalyst to obtain a polyester.

Polyketones can also be made by the process of this invention by reacting the bis(trihaloacetyl)-aromatic compounds with bis(acyl)aromatic compounds to form the polyketones. The polyketones made thereby are poly-β-diketones.

The present invention provides a process for making polyesters, polyamides, polyketones or polymers containing a mixture of any two or more of such functionalities by reacting (a) an organic compound containing at least one trichloromethylketone group with (b) an organic compound containing at least one hydroxyl, amino, or acyl group with the proviso that the carbon and to the acyl group contains a hydrogen atom and wherein the reactant molecules contain at least two of said reacting functional groups.

More specifically, the present invention concerns a new process for making polyesters, polyamides and polyketones which comprises reacting a dihydric alcohol, a diamine or a diacylaromatic compound with a bis(trichloromethylketone) compound and, when necessary, in the presence of a basic catalyst.

The present invention provides a new process for making polyesters, polyamides and polyketones which employs non-corrosive, non-water-sensitive bis(trichloromethylketones) and dihydric alcohols, diamines or diacrylaromatic compounds. This eliminates the problems associated with acid chlorides and the presence of monohydric alcohols. In the case of polyamides the by-product acid and salts as well as the toxic starting materials are eliminated. The by-product chloroform is non-corrosive and easily removed from the product and causes no reduction in molecular weight of the product.

A typical polyester reaction is shown by the following scheme:

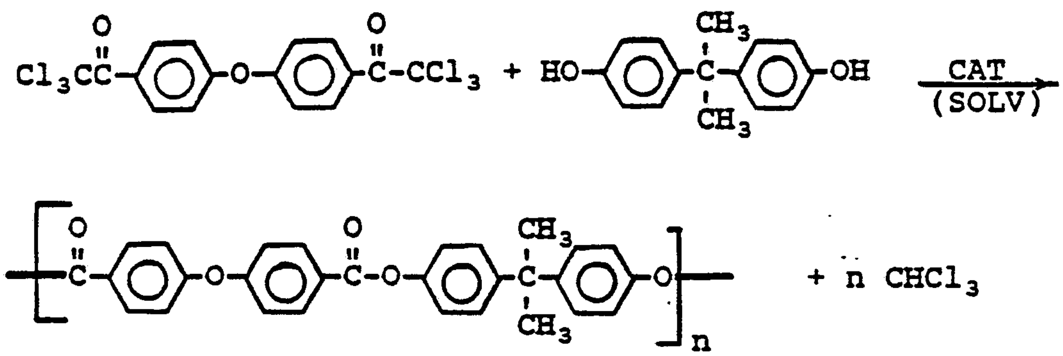

A typical polyamide reaction is shown as follows:

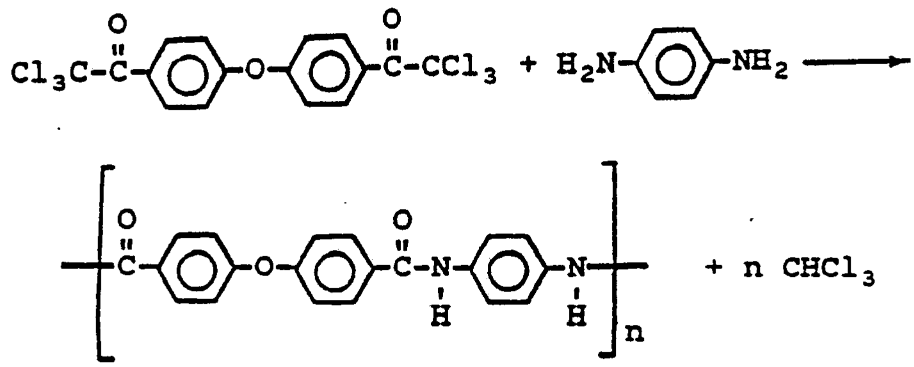

To make polyketones, the bis(trichloromethylketone)aromatic compound is reacted with a bis(acyl)-aromatic compound as shown by the following equation:

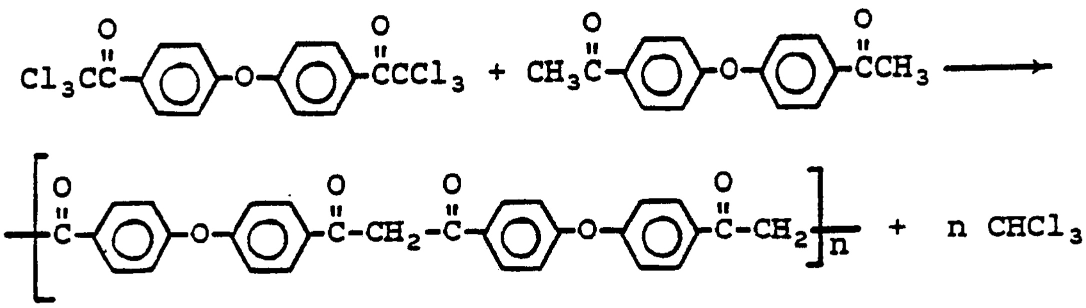

The reactants, in any case, are mixed together, with adequate stirring, in a suitable vessel either neat, in melt, or in a solvent. A catalyst is added, when necessary, then the mixture is warmed to the desired reaction temperature. The product is precipitated, washed with water, and isolated by filtration.

The aromatic bis(trichloromethylketones) useful in the polymerization reaction have the formula:

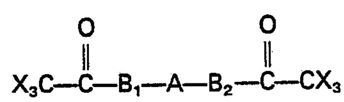

wherein $B_1$ and $B_2$ are each independently

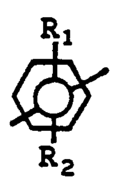 , 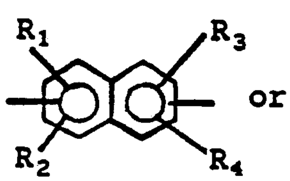 or 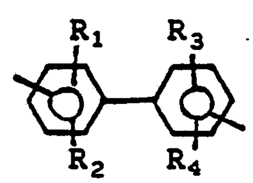

wherein $R_1$, $R_2$, $R_3$ and $R_4$ are each independently hydrogen, chlorine, bromine, an alkyl or an alkoxy group having from 1 to 4 carbon atoms, a phenyl group or

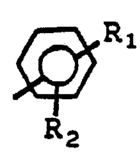

wherein $R_1$ and $R_2$ have their previous meanings;

X is chlorine or bromine; and

A is a single valence bond, oxygen, sulfur,

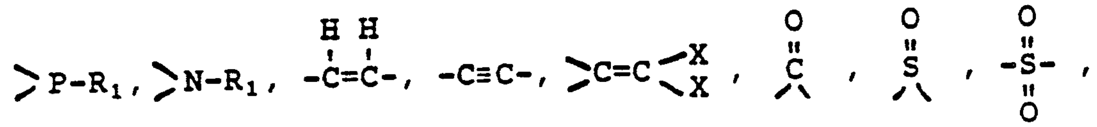

$-CH_2-O-CH_2-$, $-O-CH_2-CH_2-O-$, 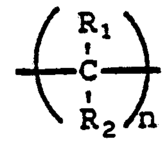 ,

an aromatic group having the formula

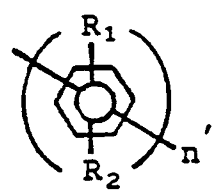 , 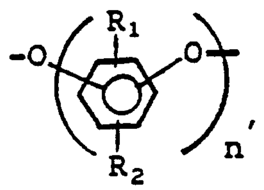 , 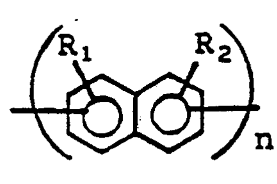 , 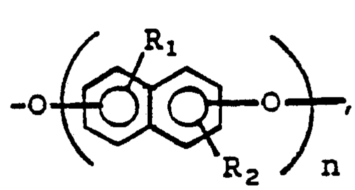 ,

or

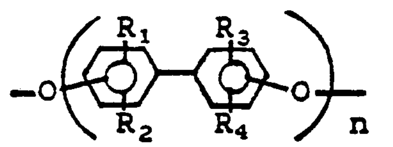 ,

where X, $R_1$, $R_2$, $R_3$ and $R_4$ have their previous meanings, and wherein n is an integer from 1 to 6.

Representative of the bis(trichloromethylketones) are 4,4' - bis(trichloroacetyl)phenyl ether, 1,4 - bis(trichloroacetylphenoxy)benzene, bis(trichloroacetyl)biphenyl, bis(trichloroacetyl)phenoxybiphenyl, 4,4' - bis(trichloroacetyl) - 3 - methyldiphenyl ether, 4,4' - bis(trichloroacetyl)diphenylmethane, 1,1 - bis{4 - [4 - (trichloroacetyl)phenoxy]phenyl} - 2,2,2 - trichloroethane, and 4,4' - bis[4 - (trichloroacetyl)phenoxy]diphenylmethane.

Representative of the dihydric alcohols for the polyester reaction are bisphenol A (4,4'-isopropylidene diphenol), resorcinol, hydroquinone, [1,1'-biphenyl]-4,4'-diol, 1,5-dihydroxynaphthalene, 1,1-dichloro-2,2-bis(4-hydroxyphenyl)ethylene, 1-(4-hydroxyphenyl)-1,3,3-trimethyl-7-hydroxyindane, 4,4'-dihydroxyphenyl ether, 1,4-dihydroxy anthraquinone, 3,3',5,5'-tetramethyl-4,4'-dihydroxybiphenyl, and 1,4-cyclohexanediol; and also alkylene glycols, e.g. ethylene and propylene glycols, 1,4-butanediol and polyols.

Representative of the diamines used to form the polyamides are ethylene diamine, 1,6-diaminohexane, propylene diamine, 4,4'-diaminobiphenyl, p-phenylenediamine, m-phenylenediamine, 2,4-diaminotoluene, (toluenediamine) 1,5-diaminonaphthalene, 4,4'-methylenedianiline, aminophenyl sulfone (diaminodiphenylsulfone), 4,4'-diaminodiphenylamine, 4,4'-diaminophenyl ether, 1,6-hexanediamine, 1,4-butanediamine, piperazine, aminoethylpiperazine, 1,4-cyclohexanediamine, 4,4'-trimethylenedipiperidine and bis(amino)polyglycols.

Representative diacyl aromatic compounds used to form the polyketones are the diacrylbenzenes (o-, m- or p-), 4,4'-bis(acetyl)phenyl ether, 1,4-bis(acetylphenoxy)benzene, bis(acetyl)phenoxybiphenyl, 4,4'-diacetylbiphenyl, 2,3-butanedione, 4,4'-bis(acetyl)diphenylmethane, 4,4'-bis(acetyl)diphenyl-2,2-propane and 4,4'-bis(acetyl)-3-methyldiphenyl ether.

The reaction to make the polyesters, polyamides and polyketones is generally conducted in the presence of a basic catalyst. If, however, the reactant amine is sufficiently basic, no catalyst is required.

While the reaction can be conducted in a melt of the reactants, a polar aprotic solvent is frequently used to advantage. Representative of such solvents useful in the reaction include tetrahydrofuran (THF), sulfolane, γ-butyrolactone, dimethylsulfoxide (DMSO), dimethylacetamide (DMA), dimethylformamide (DMF), and N-methylpyrrolidone, and hexamethylphosphoramide (HMPA).

The catalysts useful in the reaction are basic catalysts. Examples of such catalysts are: alkali metal hydrides, e.g. NaH; tertiary amines, such as trialkyl amines, e.g. triethyl amine, other tertiary amines such as 1,4-diazobicyclo[2.2.2]octane, 1,5-diazobicyclo[4.3.0]non-5-ene and dimethylaminopyridine; and lithium alkyls and amides, e.g. butyl lithium and diisopropyl lithium amide.

The reaction may be conducted over a broad temperature range from about −100°C to about +200°C, preferably from about −45°C to about +85°C. One of the advantages of this process is the low temperature at which it may be conducted, which avoids decomposition which can occur at higher temperatures.

Another advantage of the present process is the time needed for the reaction to take place which will vary with the temperature, the reactivity of the alcohols, the particular trichloromethylketones employed and the catalyst used, if any, but it is generally accomplished in from about 1 minute to 24 hours and preferably from about 6 minutes to about 12 hours. The reaction is normally very rapid at room temperatures and requires less than an hour, usually only a few minutes.

Temperatures and times outside these ranges generally result in little or no reaction or poor yields due to incomplete reaction or decomposition of the products.

Pressures may be employed within the range of from about 20 to 760 mm Hg (0,02666—1 bar). Higher pressure can be employed, but is of no particular advantage. The pressure employed is not a critical variable.

The molecular weights of the polymers normally prepared according to the process of the present invention may vary from about 1,000 to about 10,000,000 depending primarily upon the ratios and purity of the reactants. When one employs a stoichiometric ratio of the bis(trichloroacetyl)aromatic compound to that of the dihydroxy compound, the diamine compound or the bis(acyl)aromatic compound, and the reactants are very pure, one can obtain very high molecular weights. The lower molecular weights are normally desired as the very high molecular weight polymers are insoluble. The lower molecular weight polymers are obtained when an excess of one reactant over the other is employed.

The novel poly-β-diketones made by the present process have the following formula:

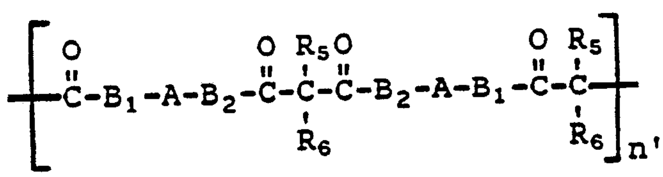

wherein A, $B_1$ and $B_2$ have their previously assigned meanings; and wherein $R_5$ and $R_6$ are each independently hydrogen, fluorine, chlorine, bromine, alkyl groups having from 1 to 6 carbon atoms, which may be straight chain or branched, or phenyl; and wherein n' is an integer from 10 to 5000.

Polymers containing the β-diketone linkage having the formula

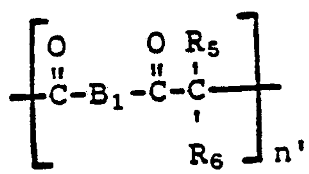

wherein $B_1$, $R_5$, $R_6$ and n' are defined as before.

Copolymers prepared by reacting bis(trihaloacyl)aromatic compounds with monomers in which the aromatic ring contains either an amino or hydroxy group in addition to an acyl group or two acyl groups will have the following formulae:

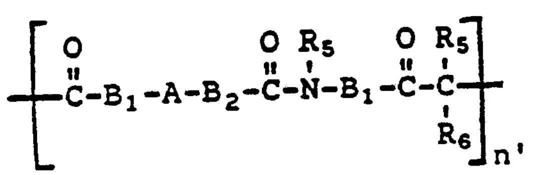 ; 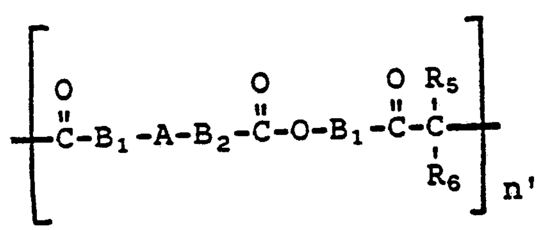 ;

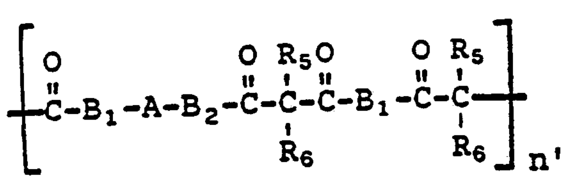 ;

wherein A, $B_1$, $B_2$, $R_5$, $R_6$ and n' have their previous meanings.

Polymers containing both β-diketone and ester linkages can be prepared by the present process and have the formula

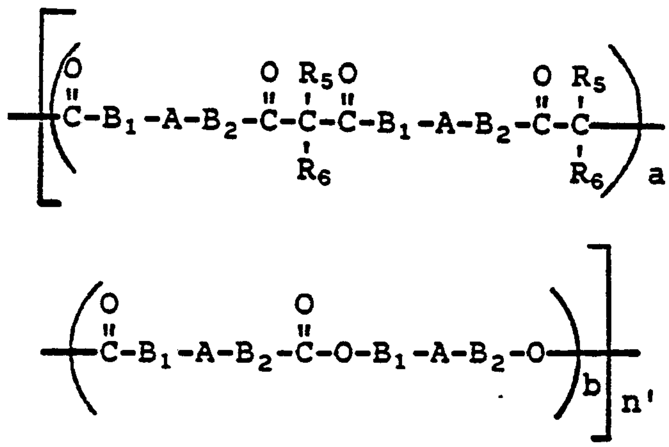

wherein A, $B_1$, $B_2$, $R_5$, $R_6$ and n' are defined as above; and a and b are each integers having a ratio of from 1:100 to 100:1 and wherein the a and b moieties can occur randomly or in block form.

Polymers containing both β-diketone and amide linkages can be prepared by the present process and have the formula

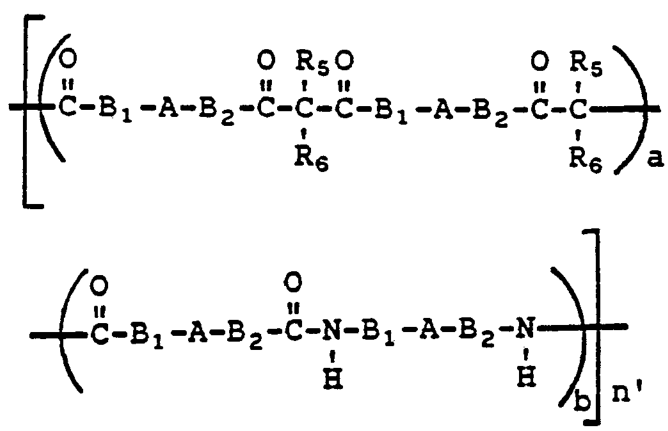

wherein A, $B_1$, $B_2$, $R_5$, $R_6$, n', a and b are defined as above.

The present reaction can also be used to prepare homopolymers if the monomer used contains a trihaloacyl group and a hydroxy, an amino or an acyl group in the same molecule. The formulae for such monomers useful in making the homopolymers are:

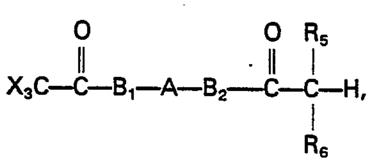, 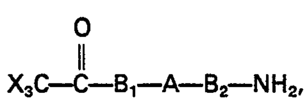, and 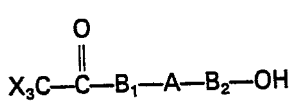

wherein A, $B_1$, $B_2$, $R_5$, $R_6$ and X have their previous meanings.

Another formula for compounds from which homopolymers can be made is

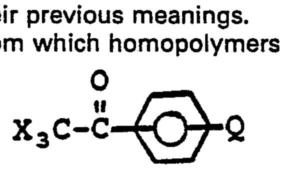

wherein X is chlorine or bromine and Q can be a hydroxy, an amine or an acyl group and wherein Q may be ortho-, meta- or para- to the trihaloacyl group. Compounds covered by the above formula include trichloroacetyl phenols, trichloroacetyl anilines and trichloroacetyl acylbenzenes, wherein the acyl group is

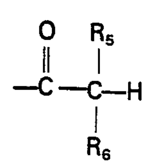

wherein $R_5$ and $R_6$ have their previous meanings.

A homopolymer containing the β-diketone linkage made from a trihaloacyl acyl benzene will have the formula:

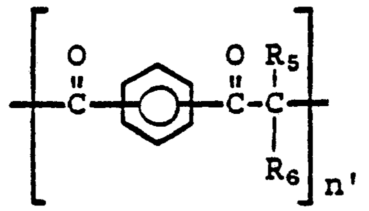

wherein $R_5$, $R_6$ and n' have their previous meanings.

It should be noted that, in order for reaction to occur with the trihaloacetyl group, the carbon α to the acyl group must contain a hydrogen atom.

In another aspect of the invention a compound containing three or more of any of the functional groups can be employed in small amounts along with the other reactants to form crosslinked polymers. Thus, tris(trichloroacetyl)benzene, dihydroxyaniline, trihydroxybenzene, triaminobenzene, triacylbenzene and the like can be used to obtain crosslinked polymers according to the invention.

The following are representative examples of the preparation of the polyesters, polyamides and polyketones according to the invention.

POLYESTERS

Example 1

Polymerization of bis-4,4'-(trichloroacetyl)diphenyl ether with bisphenol A.

The bis-4,4'-(trichloroacetyl)diphenyl ether (0.050 moles, 23.02 g) and bisphenol A (0.050 moles, 11.4 g) were weighed into a 500 ml resin flask and tetrahydrofuran (THF) (50 ml) added. Stirring was commenced and sodium hydride (0.008 moles, 0.192 g) was added as the catalyst. The solution became very viscous after 3 minutes, so the mixture was heated to 50°C and allowed to stir overnight. The mixture was allowed to cool, 100 ml THF added, and then 100 ml of 1 *N* HCl. The polymer precipitated at once, a pale yellow mass. Repeated washing with water gave a white solid which when dried *in vacuo,* gave 20.72 g (92% yield) of a very hard, tough, white mass. The polymer was shown to have a weight average molecular weight of 34,287 (relative to polystyrene standards) with a dispersity of 4.6 by gel permeation chromatography (GPC), using THF as the solvent.

Example 2

Polymerization of bis-4,4'-(trichloroacetyl)diphenyl ether with 4,4'-dihydroxybiphenyl.

The bis-4,4'-(trichloroacetyl)diphenyl ether (46.06 g, 0.10 mole) and the 4,4'-dihydroxy biphenyl (18.62 g, 0.10 mole) were weighed into a 500 ml resin flask and 200 ml THF added. The mixture was brought to 60°C and NaH (0.005 mole, 0.20 g) added all at once. After the foaming had subsided, a gradual increase in viscosity was observed until the stirring motor stalled. More THF (100 ml) was added and the mixture allowed to stir overnight. The mixture was poured into 0.03 *N* HCl (300 ml) and the polymer, collected by filtration, yielded 40.9 g of a very fine white powder which was insoluble in all solvents tested. The polymer showed a glass transition temperature (Tg) by differential scanning calorimeter (DSC) of 254.5°C.

Example 3

Polymerization of bis-4,4'-(trichloroacetyl)diphenyl ether with ethylene glycol.

This polymerization was performed as in Example 2 by weighing the reactants 4,4'-bis(trichloroacetyl)diphenyl ether (0.20 moles, 92.19 g), ethylene glycol (0.20 moles, 12.41 g) and solvent (THF, 200 ml) into a 500 ml resin flask, bringing the mixture to 55°C and adding the catalyst (NaH, 0.006 mole, 0.144 g). After stirring overnight the mixture was poured into acidic methanol and the polymer collected by filtration as a fine white powder, 55.76 g. DSC showed the polymer to have a glass transition temperature (Tg) of 116.7°C and a crystalline melt temperature (Tm) of 158.8°C.

Example 4

Polymerization of bis-4,4'-(trichloroacetyl)diphenyl ether with tetraethylene glycol.

This polymerization was performed as in Example 2 by weighing the reactants 4,4'-bis(trichloroacetyl)-diphenyl ether (0.20 moles, 92.19 g) and tetraethylene glycol (0.20 moles, 38.84 g) into a 500 ml resin flask. THF (200 ml) was added and the mixture brought to 55°C. NaH (0.006 mole, 0.144 g) was added and the mixture stirred overnight. The mixture was poured into acidic methanol and the polymer collected on a filter as a very viscous resin 77.91 g (93%).

Example 5

Polymerization of 1,4-bis(p-trichloroacetylphenoxy)benzene with bisphenol A.

The 1,4-bis(p-trichloroacetylphenoxy)benzene (0.05 moles, 27.65 g) and bisphenol A (0.050 mole, 11.41 g) were weighed into a 500 ml resin flask and THF (50 ml) added. Stirring was begun and the mixture

brought to 65°C. NaH (0.0038 mole, 0.09 g) was added as catalyst and the solution allowed to stir for 10 hours. The mixture was poured into 0.03 *N* HCl (300 ml) and the polymer, a fine white powder, collected by filtration 27.01 g (99.5%). DSC showed the polymer to have a Tg of 189°C.

A series of polymerizations were carried out as in Example 1 in which the ratios of the reactants 4,4'-bis(trichloroacetyl)diphenyl ether and bisphenol A were systematically varied while all other conditions were maintained the same. Table I shows the mole ratio of reactants used and the molecular weights obtained by GPC analysis.

TABLE I

| 4,4'-Bis(trichloroacetyl)-diphenyl ether/Bisphenol A Mole/Mole | Molecular Weight* |
|---|---|
| .978/1.000 | 51,218 |
| .985/1.000 | 64,106 |
| 1.000/1.000 | 79,962 |
| 1.017/1.000 | 70,745 |
| 1.111/1.000 | 17,215 |
| 1.200/1.000 | 10,830 |

*Weight average molecular weight relative to polystyrene standards.

## POLYAMIDES

### Example 6

Polymerization of 4,4'-bis(trichloroacetyl)diphenyl ether with 4,4'-methylenedianiline.

The compounds 4,4'-bis(trichloroacetyl)diphenyl ether (11.5 g, 0.025 moles) and 4,4'-methylenedianiline (4.96 g, 0.025 moles) were weighed into a 500 ml resin pot and 50 ml of tetrahydrofuran (THF) was added. Diazo[2.2.2]bicyclooctane (0.224 g, 0.002 moles) was added as catalyst and the mixture brought to reflux. The mixture was stirred for 4 hours, then cooled and filtered. The solid was washed with THF (200 ml) and water (200 ml) then dried in a vacuum oven overnight, leaving 10.0 g of a cream-colored powder (95.23%) yield) m.p. >360°C.

### Example 7

Polymerization of 4,4'-bis(trichloroacetyl)diphenyl ether with 1,4-phenylenediamine.

The 4,4'-bis(trichloroacetyl)diphenyl ether (0.025 mole, 11.5 g) and 1,4-phenylenediamine (0.025 mole, 2.70 g) were weighed into a 500 ml resin pot and THF (250 ml) added and the mixture brought to reflux. Triethylamine (0.35 moles, 36.3 g) was added as catalyst and co-solvent and the reaction mixture was allowed to stir at reflux overnight. The mixture was cooled, then filtered and the collected solid washed with THF (200 ml) methanol (200 ml) and water (200 ml) then dried in a vacuum oven, leaving 8.07 g (98.0%) of a cream colored powder m.p. >360°C.

### Example 8

Polymerization of 4,4'-bis(trichloroacetyl)diphenyl ether with piperazine.

The 4,4'-bis(trichloroacetyl)diphenyl ether (0.20 mole, 92.19 g) was weighed into a resin flask equipped with a mechanical stirrer, thermowell, condenser and $N_2$ source. Dimethylacetamide (DMA) (150 ml) was added and the mixture brought to 60°C to dissolve the ketone. The piperazine (0.20 mole, 17.23 g) was added in one portion with vigorous stirring. The temperature of the mixture rose at once and finally reached 105°C after 6 minutes. The reaction mixture was allowed to cool, then poured into water (400 ml) and the polymer collected as a pale yellow powder 63.5 g (100%). The polymer was compression molded at 220°C and 5000 lb/in$^2$ (34.45 MPa). Differential scanning calorimetry (DSC) shows the Tg to be 202°C.

### Example 9

Polymerization of 4,4'-bis(trichloroacetyl)diphenyl ether and aminoethylpiperazine.

This polymerization was performed as in Example 8 by weighing the 4,4'-bis(trichloroacetyl)diphenyl ether (0.20 moles, 92.19 g) and DMA (150 ml) into a 500 ml resin flask, bringing the mixture to 60°C and

adding the aminoethylpiperazine (0.20 mole, 25.84 g). The polymer reaction mixture was allowed to cool, then poured into water (400 ml) and the polymer isolated as a gum which after drying was compression molded into flexible, ductile bars. DSC shows Tg to be 187°C. Thermal gravimetric analysis (TGA) shows the polyamide to be thermally stable having only 5 percent weight loss at 310°C.

The following example shows that copolymers containing both ester and amide groups can be made.

Example 10

Copolymerization of 4,4'-bis(trichloroacetyl)diphenyl ether with bisphenol A and aminoethylpiperazine.

The 4,4'-bis(trichloroacetyl)diphenyl ether (0.10 mole, 46.09 g) and bisphenol A (0.05 mole, 11.41 g) were weighed into a 500 ml resin pot and dissolved in 100 ml THF. The NaH (0.01 mole, 0.24 g) was added and the mixture allowed to stir for 15 minutes. The mixture was then warmed to 60°C and the aminoethylpiperazine (0.05 mole, 6.46 g) added dropwise *via* syringe. The mixture was stirred at 65°C overnight, then allowed to cool to room temperature, poured into isopropanol (400 ml) and the polymer collected on a filter paper. The pale yellow polymer was dried *in vacuo* at 110°C and 5 mm for 17 hours leaving 53.0 g of polymer which was compression molded at 245°C into flexible bars.

The following example shows the preparation of a poly-β-diketone.

POLY-β-DIKETONES

Example 11

Polymerization of 4,4'-bis(trichloroacetyl)diphenyl ether with 4,4'-bis(acetyl)diphenyl ether.

In a 250 ml flask under $N_2$ diisopropylamine (0.044 mole, 4.45 g) was dissolved in 100 ml THF and the solution cooled to −70°C in a dry ice/acetone bath. n-Butyllithium (0.044 mole, 2.81 g, 1.6 M in hexane) was added *via* syringe while holding the temperature of the mixture below −50°C. 4,4'-Bis(acetyl)diphenyl ether (0.020 mole, 5.09 g) in 20 ml THF was added dropwise to this mixture with stirring while allowing the temperature to rise to −30°C. After stirring at −30°C for 30 minutes 4,4'-bis(trichloroacetyl)diphenyl ether (0.020 mole, 9.22 g) in 20 ml THF was added *via* syringe. When the addition was complete the mixture was allowed to stir and warm to room temperature overnight, then poured into 500 ml of 0.01 *N* HCl, the precipitate collected on a filter and washed with water (300 ml) and acetone (300 ml). The polymer was compression molded at 255°C/5000 lb/in$^2$ (34.45 MPa) and has a Tg = 179°C and Tm = 323°C by DSC.

In a similar manner a mixture of bis(acetyl)diphenyl ether and a bisphenol can be reacted with the bis(trichloroacetyl)aromatic compound to give a copolymer containing both ester and ketone groups in the polymer chain. The following example shows the preparation of such a copolymer.

Example 12

Copolymerization of 4,4'-bis(trichloroacetyl)diphenyl ether with 4,4'-bis(acetyl)diphenyl ether and bisphenol A.

The NaH (0.04 moles, 0.96 g) was weighed into a 500 ml resin flask and 25 ml THF added. The 4,4'-bis-(acetyl)diphenyl ether (0.020 mole, 5.09 g) in 25 ml THF was added dropwise to the stirred NaH slurry over a 45 minute period. 4,4'-Bis(trichloroacetyl)diphenyl ether (0.100 moles, 46.09 g) was then added in 50 ml THF and the mixture allowed to stir for 30 minutes. The bisphenol A (0.080 mole, 18.26 g) was added in 25 ml THF. The reaction mixture was then brought to 61°C and held there for 1 hour, cooled to room temperature and poured into 500 ml of 0.1 *N* HCl with vigorous stirring precipitating the polymer. The polymer was collected by filtration and dried *in vacuo* yielding 43.4 g (95%) of a light orange powder. Differential scanning calorimetry (DSC) showed the Tg to be 192°C.

Example 13

Copolymerization of 4,4'-bis(trichloroacetyl)diphenyl ether with 4,4'-bis(trichloroacetyl)diphenyl and bisphenol A.

The reactants (as indicated below) were placed in a 500 ml flask purged with $N_2$. THF was added to the flask to dissolve the reactants. The temperature was raised to 60°C and NaH in mineral oil was added to the mixture. The reaction mixture was brought to 71°C and held there for 2 hours. When the ketone absorption on an infrared analysis had disappeared, benzyl chloride was added to neutralize the catalyst. The polymer was collected by filtration and dried *in vacuo*. The results are shown below.

| Reagents | A | B | C |
|---|---|---|---|
| TAPE[1] | 18.44 g | 9.22 g | 0 |
| TAB[2] | 26.07 g | 35.60 g | 44.50 g |
| Bisphenol A | 22.83 g | 22.83 g | 22.83 g |
| NaH | 0.144 g | 0.144 g | 0.144 g |
| THF | 100 ml | 100 ml | 100 ml |
| Tg (of polymer product) | 240°C | 244°C | 237°C and 360°C |

[1]4,4′-bis(trichloroacetyl)diphenyl ether
[2]4,4′-bis(trichloroacetyl)biphenyl
A shows 60 percent TAB present
B shows 80 percent TAB present
C shows 100 percent TAB present.

Other examples are given in Table II in which a particular bis(trichloroacetyl)aromatic compound and a number of dihydroxy compounds are shown together with the reactant ratios, catalysts and solvents employed.

TABLE II

| Dihydroxy Compound[1] | | Trichloroacetyl*[1] Compound | Solvent[2] | Catalyst NaH[1] | Tg (°C) | Tm (°C) |
|---|---|---|---|---|---|---|
| 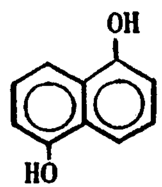 | 10 | .10 | THF/HMPA 3/1 | .008 | 224 | -- |
| 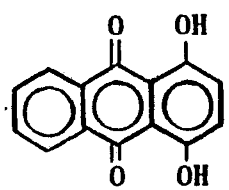 | .05 | .05 | THF/HMPA 3/1 | .008 | 220 | -- |
| 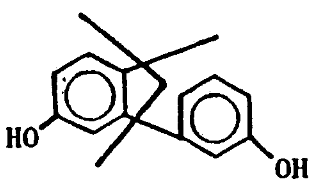 | .037 | .037 | THF | .0025 | 186 | -- |

TABLE II continued

| Dihydroxy Compound[1] | | Trichloroacetyl*[1] Compound | Solvent[2] | Catalyst NaH[1] | Tg (°C) | Tm (°C) |
|---|---|---|---|---|---|---|
| 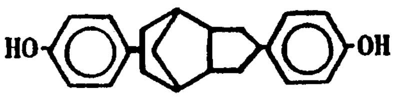 | .171 | .171 | THF | .011 | 184 | -- |
| 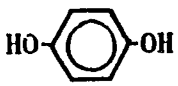 | .10 | .10 | THF | .008 | 212 | -- |
| 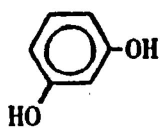 | .10 | .10 | THF | .008 | -- | 211 |
| 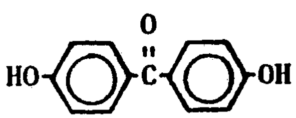 | .20 | .20 | THF | .03 | -- | >400 |

*4,4'-Bis(trichloroacetyl)phenyl ether was used in each experiment in this table.
[1]mole
[2]THF means tetrahydrofuran; HMPA means hexamethylphosphoramide.

**Claims**

1. A process for making a polyester, a polyamide, a polyketone or a polymer containing a mixture of any two or more of such functionalities characterized by reacting (a) an organic compound containing at least one trichloromethylketone group with (b) an organic compound containing at least one hydroxyl, amino, or acyl group, with the proviso that the carbon alpha to the acyl group contains a hydrogen atom, and wherein the reactant molecules contain at least two of said reacting functional groups.

2. A process as claimed in Claim 1, wherein a compound containing a trichloromethylketone group and a hydroxyl, amino or acyl group is polymerized.

3. A process as claimed in Claim 1 wherein a bis(trichloromethylketone) compound is reacted with an organic compound containing two hydroxyl, amino or acyl groups or a mixture of two or more thereof.

4. The process of Claim 1 wherein component (a) has the formula:

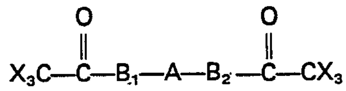

wherein $B_1$ and $B_2$ are each independently

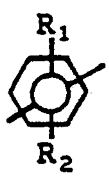 , 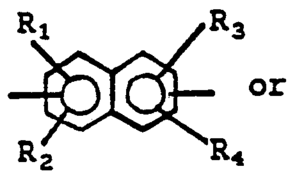 or 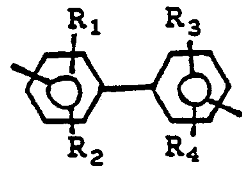

wherein $R_1$, $R_2$, $R_3$ and $R_4$ are each independently hydrogen, chlorine, bromine, an alkyl or an alkoxy group having from 1 to 4 carbon atoms, a phenyl group or

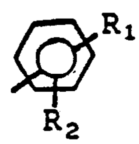

wherein $R_1$ and $R_2$ have their previous meanings;

X is chlorine or bromine; and

A is a single valence bond, oxygen, sulfur,

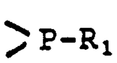 , 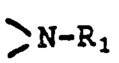 , 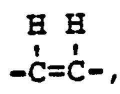 , $-C\equiv C-$, 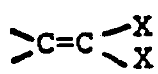 , 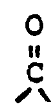 , 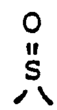 , 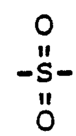 ,

$-CH_2-O-CH_2-$, $-O-CH_2-CH_2-O-$, 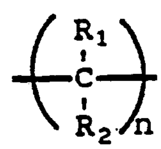 ,

an aromatic group having the formula

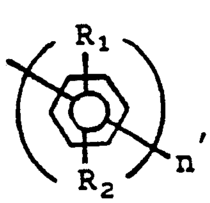 , 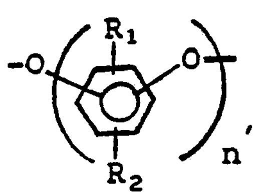 , 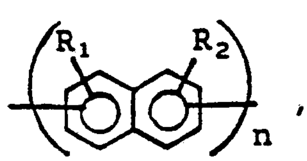 , 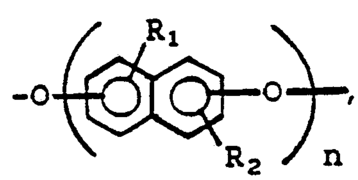 ,

or

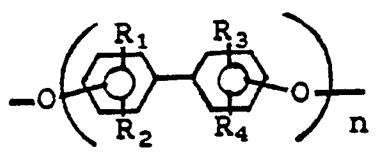 ,

X, $R_1$, $R_2$, $R_3$ and $R_4$ have their previous meanings, and wherein n is an integer from 1 to 6, and component (b) is a dihydric alcohol, a diamine, a diacyl compound or a mixture thereof.

5. The process of Claim 4 wherein the reaction is conducted in a polar aprotic solvent.

6. The process of Claim 4 wherein the dihydric alcohol is a bisphenol, a glycol or a polyglycol.

7. The process of Claim 4 wherein the bis(trichloromethylketone) is a 4,4'-bis(trichloroacetyl)diphenyl ether and (b) is 4,4'-isopropylidene diphenol, 4,4'-dihydroxybiphenyl, monoethylene glycol, monopropylene glycol, a polyethylene glycol or a polypropylene glycol, diacetyl benzene, 4,4'-bis(acetyl)-diphenyl ether, 1,4-bis(acetylphenoxy)benzene, bis(acetyl)phenoxybiphenyl, 4,4'-bis(acetyl)diphenylmethane, 4,4'-bis(acetyl)diphenyl-2,2-propane, 4,4'-bis(acetyl)-3-methyldiphenyl ether, 4,4-bis(acetyl)-benzophenone, 4,4'-methylenedianiline, 1,4-phenylenediamine, piperazine, aminoethylpiperazine or a bis-(amino)polyoxyalkyleneglycol.

8. A process as claimed in Claim 6 or Claim 7 wherein the reaction is conducted in the presence of a basic catalyst.

9. A process as claimed in Claim 8 wherein the basic catalyst is an alkali or alkaline earth metal hydride, a tertiary alkyl amine or an alkali metal alkyl or amide.

10. A process as claimed in any one of the preceding claims wherein the reaction is conducted at a temperature of from −100°C to +200°C.

11. A poly-β-diketone containing repeating units of the formula

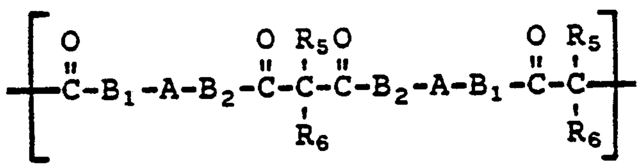

wherein A, $B_1$ and $B_2$, are as defined in Claim 4; $R_5$ and $R_6$ are each independently hydrogen, fluorine, chlorine, bromine, alkyl groups having from 1 to 6 carbon atoms, which may be straight chain or branched, or phenyl; and having a chain length of from 10 to 5000 of the said repeating units.

12. A polymer containing repeating β-diketone units of the formula

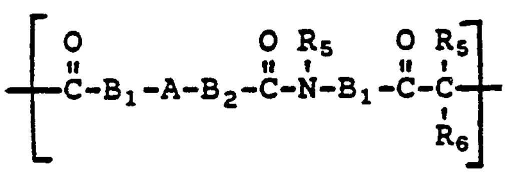 ;

wherein A, $B_1$ and $B_2$ are defined as in Claim 4; $R_5$ and $R_6$ are as defined in Claim 11, and having a chain length of from 10 to 5000 of the said repeating units.

13. A polymer containing repeating β-polyketone units of the formula

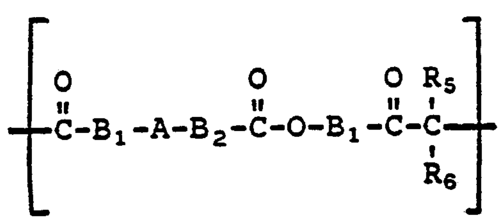 ;

wherein A, $B_1$ and $B_2$ are defined as in Claim 4; $R_5$ and $R_6$ are as defined in Claim 11, and having a chain length of from 10 to 5000 of the said repeating units.

14. A polymer containing repeating β-diketone units of the formula

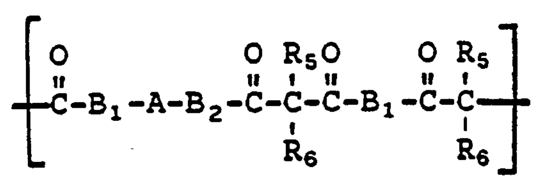 ;

wherein A, $B_1$ and $B_2$ are as defined in Claim 4; $R_5$ and $R_6$ are as defined in Claim 11, and having a chain length of from 10 to 5000 of the said repeating units.

15. A polymer containing repeating β-diketone units of the formula

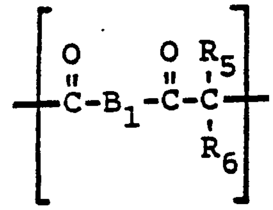

wherein $B_1$ as is defined in Claim 4; $R_5$ and $R_6$ are as defined in Claim 11, and having a chain length of from 10 to 5000 of the said repeating units.

16. A polymer containing repeating β-diketone units of the formula

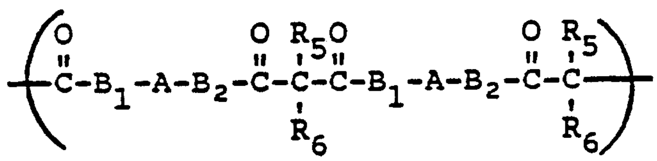

and ester units of the formula

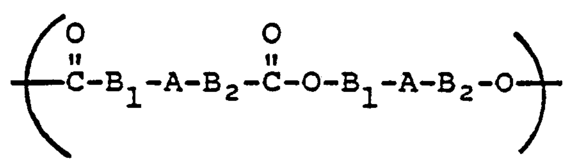

wherein A, $B_1$ and $B_2$ are as defined in Claim 4; $R_5$ and $R_6$ are as defined in Claim 11, the ratio of the number of the said β-diketone units to the number of the said ester units if from 1:100 to 100:1, and comprising from 10 to 5000 of each of the said repeating units.

17. A polymer containing both β-diketone units having the formula

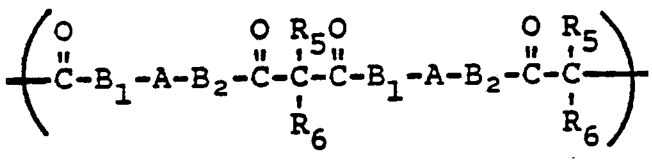

and amide units having the formula

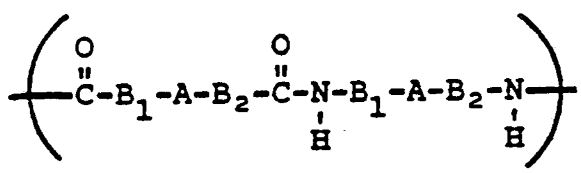

wherein A, $B_1$ and $B_2$ are defined as in Claim 4; $R_5$ and $R_6$ are defined as in Claim 11; the ratio of the number of the said β-diketone units to the number of the said amide units is from 1:100 to 100:1, and comprising from 10 to 5000 of each of the said repeating units.

**Patentansprüche**

1. Verfahren zum Herstellen eines Polyesters, eines Polyamids, eines Polyketons oder eines Polymeren enthaltend eine Mischung von zwei oder mehreren dieser Funktionalitäten, gekennzeichnet durch Umsetzen (a) einer mindestens eine Trichlormethylketongruppe enthaltenden organischen Verbindung mit (b) einer mindestens eine Hydroxyl-, Amino- oder Acylgruppe enthaltenden organischen Verbindung, mit der Bedingung, daß der Kohlenstoff in Alpha-Stellung zur Acylgruppe ein Wasserstoffatom enthält, wobei die reagierenden Moleküle mindestens zwei dieser reaktiven funktionellen Gruppen enthalten.

2. Verfahren nach Anspruch 1, dadurch gekennzeichnet, daß eine Verbindung, die eine Trichlormethylketongruppe und eine Hydroxyl-, Amino- oder Acylgruppe enthält, polymerisiert wird.

3. Verfahren nach Anspruch 1, dadurch gekennzeichnet, daß eine Bis(trichlormethylketon)verbindung

umgesetzt wird mit einer organischen Verbindung enthaltend zwei Hydroxyl-, Amino oder Acylgruppen oder eine Mischung von zwei oder mehreren derselben.

4. Verfahren nach Anspruch 1, dadurch gekennzeichnet, daß die Verbindung (a) die Formel hat:

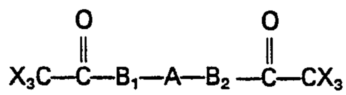

in der $B_1$ und $B_2$ jeweils unabhängig voneinander bedeuten

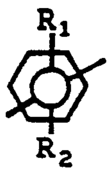 , 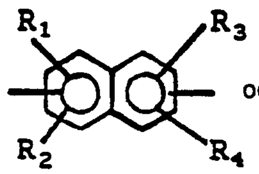 oder 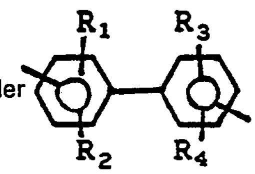

wobei $R_1$, $R_2$, $R_3$ und $R_4$ jeweils unabhängig Wasserstoff, Chlor, Brom, eine Alkyl- oder eine Alkoxygruppe mit 1 bis 4 Kohlenstoffatomen, eine Phenylgruppe oder

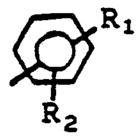

bedeuten, wobei $R_1$ und $R_2$ die zuvor angegebene Bedeutung haben, X Chlor oder Brom ist und A eine einfache Valenzbindung, Sauerstoff, Schwefel,

$>P-R_1$, $>N-R_1$, 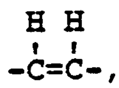, $-C{\equiv}C-$, 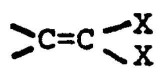, 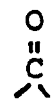, 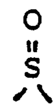, 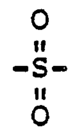,

$-CH_2-O-CH_2-$, $-O-CH_2-CH_2-O-$, 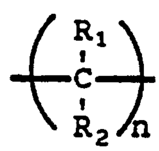,

eine aromatische Gruppe der Formel

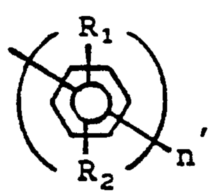, 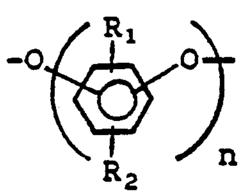, 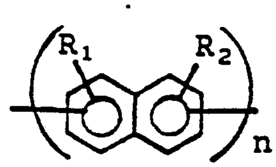, 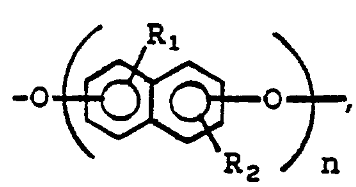,

oder

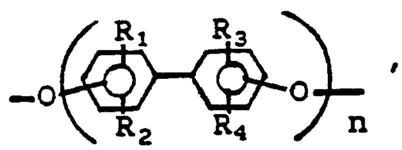,

ist, wobei X, $R_1$, $R_2$, $R_3$ und $R_4$ die zuvor angegebene Bedeutung haben und wobei n eine ganze Zahl von 1 bis 6 ist und Verbindung (b) ein zweiwertiger Alkohol, ein Diamin, eine Diacylverbindung oder eine Mischung derselben ist.

5. Verfahren nach Anspruch 4, dadurch gekennzeichnet, daß die Reaktion in einem polaren aprotischen Lösungsmittel ausgeführt wird.

6. Verfahren nach Anspruch 4, dadurch gekennzeichnet, daß der zweiwertige Alkohol ein Bisphenol, ein Glykol oder ein Polyglykol ist.

7. Verfahren nach Anspruch 4, dadurch gekennzeichnet, daß das Bis(trichlormethylketon) ein 4,4'-Bis-(trichloracetyl)diphenylether ist und (b) 4,4'-Isopropylidendiphenol, 4,4'-Dihydroxybiphenyl, Monoethylenglykol, Monopropylenglykol, ein Polyethylenglykol oder ein Polypropylenglykol, Diacetylbenzol, 4,4'-Bis-(acetyl)diphenylether, 1,4-Bis(acetylphenoxy)benzol, Bis(acetyl)phenoxybiphenyl, 4,4'-Bis(acetyl)diphenylmethan, 4,4'-Bis(acetyl)diphenyl-2,2-propan, 4,4'-Bis(acetyl)-3-methyldiphenylether, 4,4-Bis(acetyl)benzophenon, 4,4'-Methylendianilin, 1,4-Phenylendiamin, Piperazin, Aminoethylpiperazin oder ein Bis(amino)-polyoxyalkylenglykol ist.

8. Verfahren nach Anspruch 6 oder 7, dadurch gekennzeichnet, daß die Reaktion in Gegenwart eines basischen Katalysators ausgeführt wird.

9. Verfahren nach Anspruch 8, dadurch gekennzeichnet, daß der basische Katalysator ein Alkali oder Erdalkalihydrid, ein tertiäres Alkylamin oder ein Alkalialkyl oder -amid ist.

10. Verfahren nach jedem der vorstehenden Ansprüche, dadurch gekennzeichnet, daß die Reaktion bei einer Temperatur von −100°C bis +200°C ausgeführt wird.

11. Poly-β-diketon enthaltend wiederkehrende Einheiten der Formel

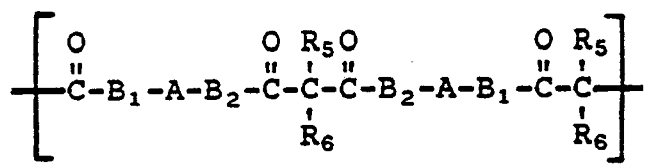

in der A, $B_1$ und $B_2$ die in Anspruch 4 angegebene Bedeutung haben, $R_5$ und $R_6$ jeweils unabhängig sind Wasserstoff, Fluor, Chlor, Brom, Alkylgruppen mit 1 bis 6 Kohlenstoffatomen, die geradkettig oder verzweigt sein können, oder Phenyl, und die eine Kettenlänge von 10 bis 5000 der wiederkehrenden Einheiten aufweisen.

12. Polymer enthaltend wiederkehrende β-Diketoneinheiten der Formel

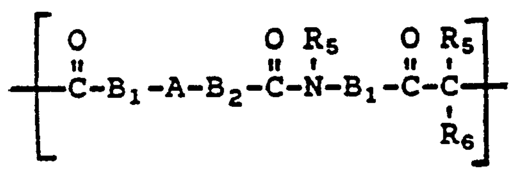

in der A, $B_1$ und $B_2$ die in Anspruch 4 angegebene Bedeutung haben, $R_5$ und $R_6$ die in Anspruch 11 angegebene Bedeutung haben und die eine Kettenlänge von 10 bis 5000 der wiederkehrenden Einheiten aufweisen.

13. Polymer enthaltend wiederkehrende β-Polyketoneinheiten der Formel

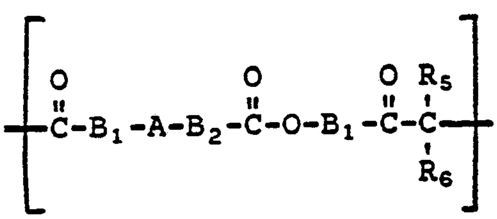

in der A, $B_1$ und $B_2$ die in Anspruch 4 angegebene Bedeutung haben, $R_5$ und $R_6$ die in Anspruch 11 angegebene Bedeutung haben und die eine Kettenlänge von 10 bis 5000 der wiederkehrenden Einheiten aufweisen.

14. Polymer enthaltend wiederkehrende β-Diketoneinheiten der Formel

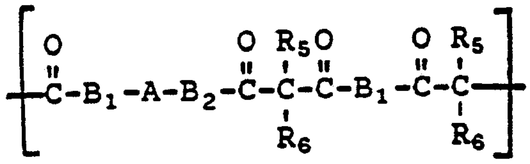

in der A, $B_1$ und $B_2$ die in Anspruch 4 angegebene Bedeutung haben, $R_5$ und $R_6$ die in Anspruch 11 angegebene Bedeutung haben und die eine Kettenlänge von 10 bis 5000 der wiederkehrenden Einheiten aufweisen.

15. Polymer enthaltend wiederkehrende β-Diketoneinheiten der Formel

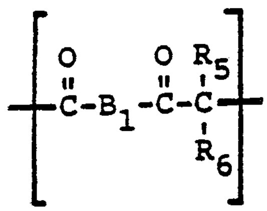

in der $B_1$ die in Anspruch 4 angegebene Bedeutung hat, $R_5$ und $R_6$ die in Anspruch 11 angegebene Bedeutung haben und die eine Kettenlänge von 10 bis 5000 der wiederkehrenden Einheiten aufweisen.

16. Polymer enthaltend beide β-Diketoneinheiten der Formel

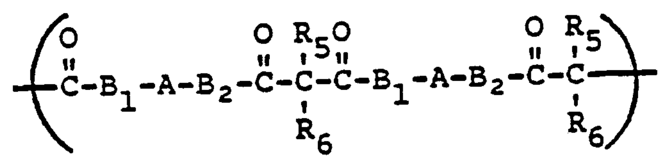

und Estereinheiten der Formel

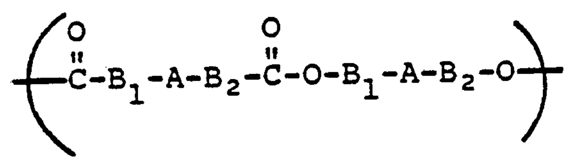

wobei A, $B_1$ und $B_2$ die in Anspruch 4 angegebene Bedeutung haben, $R_5$ und $R_6$ die in Anspruch 11 angegebene Bedeutung haben und das Verhältnis der zahl der β-Diketoneinheiten zur Zahl der Estereinheiten von 1:100 bis 100:1 beträgt und 10 bis 5000 jeder der wiederkehrenden Einheiten enthält.

17. Polymer enthaltend beide β-Diketoneinheiten der Formel

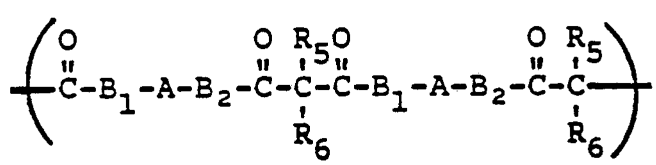

und Amideinheiten der Formel

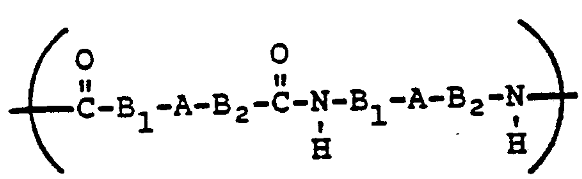

wobei A, $B_1$ und $B_2$ die in Anspruch 4 angegebene Bedeutung haben, $R_5$ und $R_6$ die in Anspruch 11 angegebene Bedeutung haben, das Verhältnis der Zahl der β-Diketoneinheiten zur Zahl der Amideinheiten von 1:100 bis 100:1 beträgt und 10 bis 5000 jeder der wiederkehrenden Einheiten enthält.

**Revendications**

1. Procédé de préparation d'un polyester, d'une polyamide, d'une polycétone ou d'un polymère contenant un mélange de deux ou plus de ces fonctionnalités, caractérisé par le fait que l'on fait réagir (a) un composé organique contenant au moins un groupe trichlorométhylcétone avec (b) un composé organique contenant au moins un groupe hydroxyle, un groupe amino, ou un groupe acyle, à condition que le carbone α du groupe acyle contienne un atome d'hydrogène, et que les molécules de réactifs contiennent au moins deux desdits groupes fonctionnels réactifs.

2. Procédé selon la revendication 1, dans lequel on polymérise un composé contenant un groupe trichlorométhylcétone, et un groupe hydroxyle, un groupe amino ou un groupe acyle.

3. Procédé selon la revendication 1, dans lequel on fait réagir un compose de la bis(trichlorométhylcétone) avec un composé organique contenant deux groupes hydroxyle, amino ou acyle, ou un mélange de deux ou plus de ces groupes.

4. Procédé selon la revendication 1, dans lequel le composant (a) a la formule:

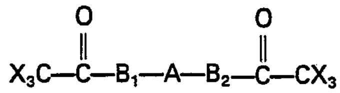

où $B_1$ et $B_2$ sont chacun, indépendamment,

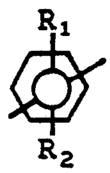 , 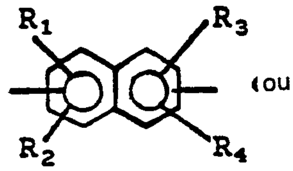 ou 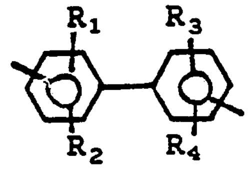

où $R_1$, $R_2$, $R_3$ et $R_4$ sont chacun, indépendamment, l'hydrogène, le chlore, le brome, un groupe alkyle ou un groupe alcoxy possédant de 1 à 4 atomes de carbone, un groupe phényle ou

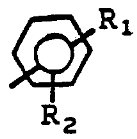

où $R_1$ et $R_2$ ont leurs significations précédentes: X est le chlore ou le brome; et A est une liaison monovalente, l'oxygène, le soufre,

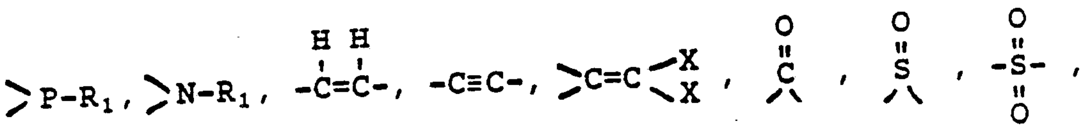

$-CH_2-O-CH_2-$, $-O-CH_2-CH_2-O-$, 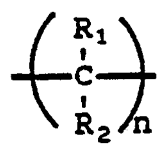 ,

un groupe aromatique ayant la formule

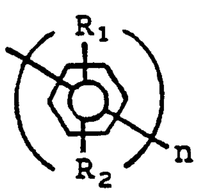 , 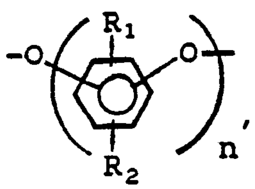 , 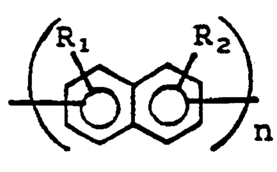 , 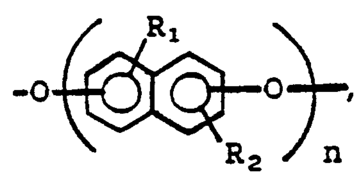 ,

ou

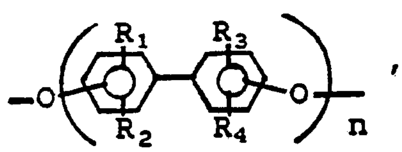 ,

X, $R_1$, $R_2$, $R_3$ et $R_4$ ont leurs significations précédentes, et où n est un entier valant de 1 à 6 et dans lequel le composant (b) est, un dialcool, une diamine, un composé diacyle ou un mélange de ces composants.

5. Procédé selon la revendication 4, dans lequel la réaction s'effectue dans un solvant polaire aprotique.

6. Procédé selon la revendication 4, dans lequel le dialcool est un bisphénol, un glycol ou un polyglycol.

7. Procédé selon la revendication 4 dans lequel la bis(trichlorométhylcétone) est un 4,4'-bis(trichloroacétyl)diphényléther et (b) est le 4,4'-isopropylidène diphénol, le 4,4'-dihydroxybiphényle, le monoéthylèneglycol, le monopropylèneglycol, un polyéthylèneglycol ou un polypropylèneglycol, le diacétylbenzène, le 4,4'-bis(acétyl)diphényléther, le 1,4-bis(acétylphénoxy)benzène, le bis(acétyl)phénoxybiphényle, le 4,4'-bis(acétyl)diphénylméthane, le 4,4'-bis(acétyl)diphényl-2,2-propane, le 4,4'bis(acétyl)-3-méthyldiphényléther, la 4,4-bis(acétyl)benzophénone, la 4,4'-méthylènedianiline, la 1,4-phénylènediamine, la pipérazine, l'aminoéthylpipérazine ou un bis(amino)polyoxyalkylène glycol.

8. Procédé selon la revendication 6 ou 7, dans lequel la réaction s'effectue en présence d'un catalyseur basique.

9. Procédé selon la revendication 8, dans lequel le catalyseur basique est un hydrure d'un métal alcalin ou alcalino-terreux, une alkylamine tertiaire ou un alkyle d'un métal alcalin ou un amide d'un métal alcalin.

10. Procédé selon l'une des revendications précédentes, dans lequel la réaction s'effectue à une température située entre −100°C et +200°C.

11. Poly-β-dicétone contenant des unités répétitives de la formule:

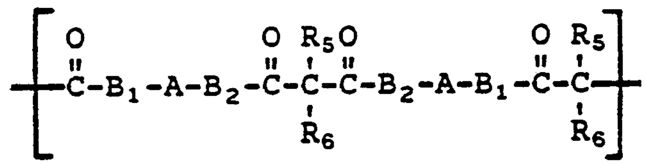

où A, $B_1$ et $B_2$ sont comme définis dans la revendication 4; $R_5$ et $R_6$ sont chacun, indépendamment, l'hydrogène, le fluor, le chlore, le brome, les groupes alkyle ayant de 1 à 6 atomes de carbone, qui peuvent être à chaîne droite ou ramifiée, ou un groupe phényle; et contenant une longueur de chaîne allant de 10 à 5000 desdites unités répétitives.

12. Polymère contenant des unités répétitives du groupe β-dicétone de la formule:

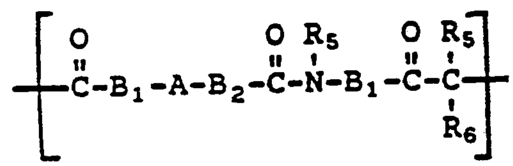

où A, $B_1$ et $B_2$ sont définis dans la revendication 4; $R_5$ et $R_6$ sont comme définis dans la revendication 11, et ayant une longueur de chaîne de 10 à 5000 desdites unités répétitives.

13. Polymère contenant les unités de β-polycétone répétitives de la formule:

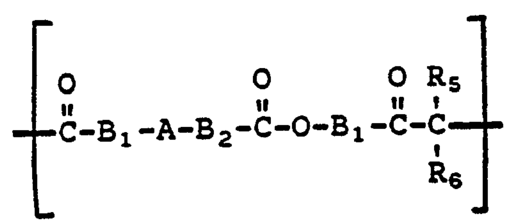

où A, $B_1$ et $B_2$ sont définis comme dans la revendication 4; $R_5$ et $R_6$ sont comme définis dans la revendication 11, et ayant une longueur de chaîne de 10 à 5000 desdites unités répétitives.

14. Polymère contenant les unités de β-polycétone répétitives de la formule:

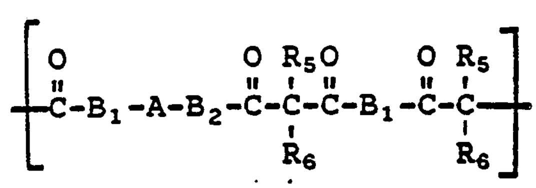

où A, $B_1$ et $B_2$ sont comme définis dans la revendication 4; $R_5$ et $R_6$ sont comme définis dans la revendication 11, et ayant une longueur de chaîne de 10 à 5000 desdites unités répétitives.

15. Polymère contenant les unités de β-dicétone répétitives de la formule:

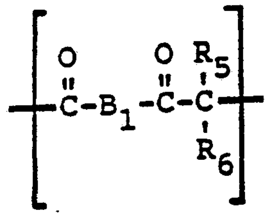

où $B_1$ est défini comme dans la revendication 4; $R_5$ et $R_6$ sont comme définis dans la revendication 11, et ayant une longueur de chaîne de 10 à 5000 desdites unités répétitives.

16. Polymère contenant à la fois des unités de β-dicétone de la formule:

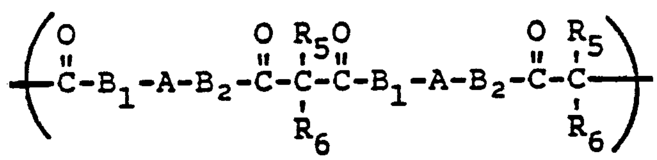

et des unités ester de la formule:

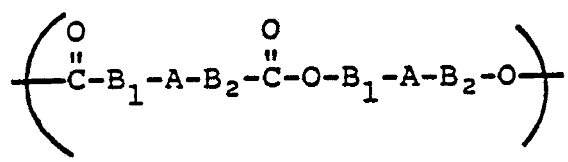

où A, $B_1$ et $B_2$ sont comme définis dans la revendication 4; $R_5$ et $R_6$ sont comme définis dans la revendication 11, le rapport entre le nombre desdites unités β-dicétone et le nombre desdites unités ester est de 1:100 à 100:1, et comportant de 10 à 5000 de chacune desdites unités répétitives.

17. Polymère contenant à la fois des unités de β-dicétone de la formule:

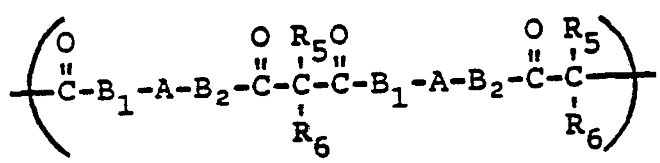

et des unités ester de la formule:

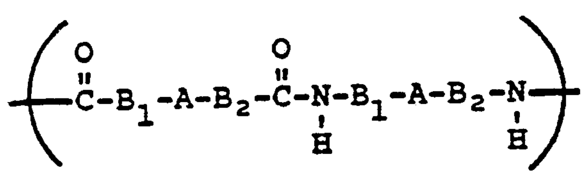

où A, $B_1$ et $B_2$ sont comme définis dans la revendication 4; $R_5$ et $R_6$ sont définis comme dans la revendication 11, le rapport entre le nombre desdites unités β-dicétone et le nombre desdites unités amide est de 1:100 à 100:1, et comportant de 10 à 5000 de chacune desdites unités répétitives.